# EUROPÄISCHE PATENTSCHRIFT

(11) **EP 0 678 235 B1**
(45) Veröffentlichungstag und Bekanntmachung des Hinweises auf die Patenterteilung: **30.06.1999**
(21) Anmeldenummer: 95103112.9
(22) Anmeldetag: 04.03.1995
(51) Int. Cl.: A01D 34/64

(54) **Aufsitz-Rasenmäher**
Lawn mower with seating for operator
Tondeuse à gazon à place assise pour conducteur

(30) Priorität: 18.04.1994 DE 4413332
(43) Veröffentlichungstag der Anmeldung: 25.10.1995
(73) Patentinhaber: ETESIA S.à.r.l., 67160 Wissembourg (FR)
(72) Erfinder:
(74) Vertreter: Brommer, Hans Joachim, Dr.-Ing.

(56) Entgegenhaltungen:
- EP-A- 0 344 128
- US-A- 3 123 961
- US-A- 3 630 010
- US-A- 3 686 840

## Beschreibung

Die Erfindung betrifft einen Aufsitz-Rasenmäher, bestehend aus einem Fahrgestell, an dem direkt oder indirekt folgende Teile montiert sind: Räder zum Verfahren des Rasenmähers, zumindest ein Mähwerk, zumindest ein Antriebsmotor für das Mähwerk und zumindest einen Teil der Räder, ein Grassammelbehälter, der durch einen Auswurfkanal mit dem Mähwerk verbunden ist, und ein Sitz für den Fahrer des Rasenmähers.

Derartige Rasenmäher sind in verschiedenen Bauformen bekannt, etwa ähnlich einem kleinen Traktor, also mit einem oberhalb der Vorderräder angeordneten Antriebsmotor, oder ähnlich einem Motorroller, bei dem sich der Motor unterhalb des Sitzes befindet. Der Grassammelbehälter ist in beiden Fällen im rückwärtigen Bereich des Rasenmähers angeordnet und bei vorn liegendem Motor durch einen direkt nach hinten laufenden Auswurfkanal, bei mittig angeordnetem Motor durch einen seitlich herausgeführten Auswurfkanal mit dem Mähwerk verbunden.

Durch die EP-A 344 128 ist ein Rasenmäher mit den Merkmalen des Oberbegriffes von Patentanspruch 1 bekannt. Daneben ist durch die US 3 123 961 ein Aufsitz-Rasenmäher ohne Grassammelbehälter bekannt. Dabei sind Vorder- und Hinterachse durch ein von vorne nach hinten ansteigendes Rohr miteinander verbunden und der Motor befindet sich zwischen den Hinterrädern.

Die grundsätzliche Problematik bei derartigen Aufsitz-Rasenmähern besteht darin, daß man einerseits eine möglichst kompakte Anordnung von Antriebsmotor, Mähwerk und Grassammelbehälter anstrebt, was für einen Einbau des Antriebsmotors im mittleren Bereich des Fahrgestelles spricht, daß man aber andererseits bei einer solchen Motorposition gezwungen wird, den Auswurfkanal seitlich um den Motor herumzuführen, wodurch der Strömungswiderstand bei der Förderung des abgeschnittenen Grases zunimmt, das Mähwerk also einen größeren Förderdruck erzeugen muß. Nicht zuletzt müssen diese unterschiedlichen Forderungen in Einklang gebracht werden mit einer ergonomisch günstigen Sitzposition für den Fahrer.

Hiervon ausgehend liegt der vorliegenden Erfindung die Aufgabe zugrunde, die bekannten Aufsitzrasenmäher dahingehend zu verbessern, daß sie sowohl einen sehr kompakten Aufbau als auch eine strömungsgünstige Führung des Auswurfkanales gestatten. Darüber hinaus soll sich der erfindungsgemäße Rasenmäher durch gefällige äußere Form auszeichnen.

Diese Aufgabe wird erfindungsgemäß dadurch gelöst, daß das Fahrgestell zumindest im Hauptbereich seiner Längserstreckung von vorn nach hinten ansteigt, und zwar mit einem Winkel von 20° bis 40°, vorzugsweise von etwa 25° bis etwa 35°.

Durch diese Schrägstellung des Fahrgestelles ergibt sich der Vorteil , daß sowohl der Antriebsmotor wie auch der Auswurfkanal und größtenteils auch der Grassammelbehälter unterhalb des Fahrgestelles angeordnet werden können und nur noch der Sitz oberhalb desselben montiert wird. Man erhält dadurch eine äußerst raumsparende Anordnung aller Komponenten bei kurzem Förderweg für den Auswurfkanal , der mittig in den Grassammelbehälter münden kann. Auch entfallen die bei bisherigen Bauformen bekannten Unzulänglichkeiten, daß der Auswurfkanal die Hinterachse durchquert oder daß der Grasauswurf durch ein zusätzliches Gebläse unterstützt werden muß.

Eine besonders vorteilhafte Weiterbildung der Erfindung besteht darin, daß das Fahrgestell rahmenartig ausgebildet wird, insbesondere als ein in der Ansicht von oben etwa U-förmiger Rohr-Rahmen, der gleichmäßig schräg nach oben läuft, derart, daß er am vorderen Ende die Vorderräder und deren Lenkung trägt, während er am hinteren Ende den Grassammelbehälter umfaßt. Man erhält dadurch nicht nur ein optisch sehr ansprechendes Aussehen sondern erhöht auch den Gebrauchswert, weil dieser Rahmen das Auf- und Absteigen des Fahrers erleichtert und einen zusätzlichen Seitenschutz für den Fahrer bietet.

Der durch den Rahmen gebildete Zwischenraum wird zweckmäßig durch eine Abdeckung abgeschlossen, die an ihrer Oberseite den Sitz trägt und am vorderen unteren Ende eine Art Wanne für die Füße des Fahrers bilden kann. In diesem Bereich läuft der Rahmen zweckmäßig in einer kurzen Abbiegung nach oben aus.

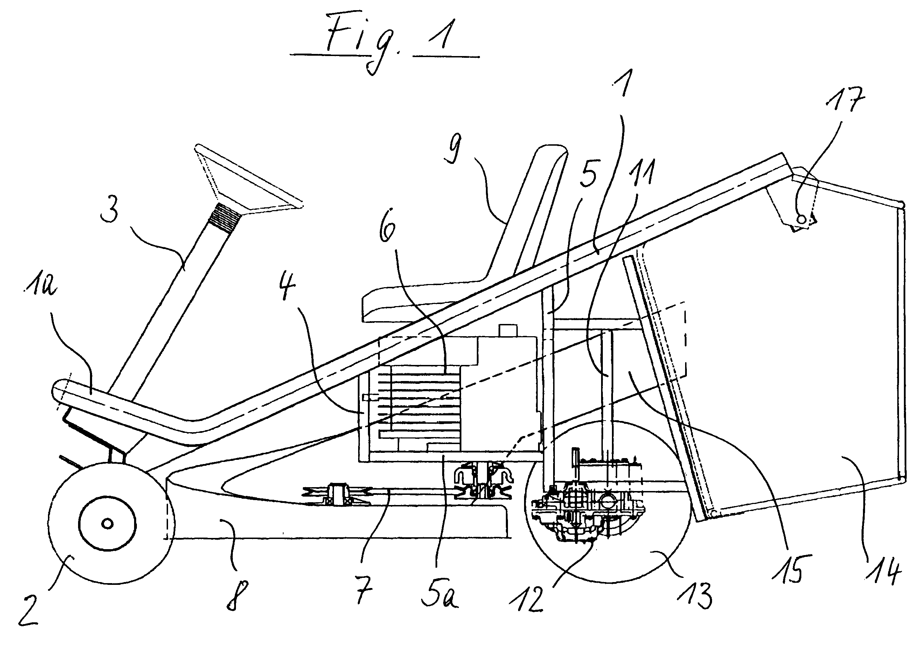

Weitere Merkmale und Vorteile der Erfindung ergeben sich aus der nachfolgenden Beschreibung eines Ausführungsbeispieles anhand der Zeichnungen; dabei zeigt
- Figur 1: eine schematische Seitenansicht des Rasenmähers;
- Figur 2: eine Ansicht von oben auf den Rasenmäher gemäß Figur 1, aber ohne Abdeckung 10, und
- Figur 3: ein Schrägbild des Rasenmähers.

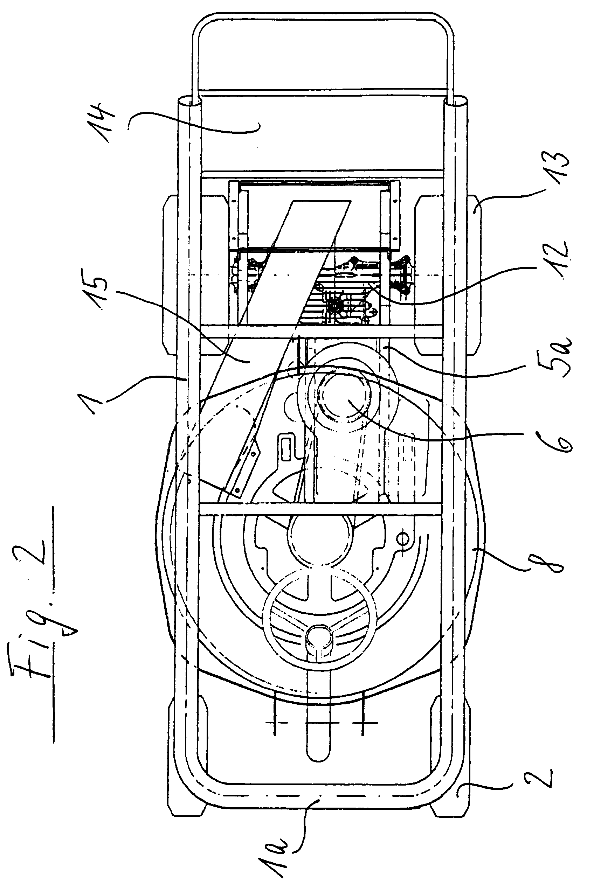

Wie die Zeichnungen zeigen ist das Fahrgestell 1 als umlaufender, U-förmiger Rahmen ausgebildet, der von vorn nach hinten schräg unter einem Winkel von etwa 30° ansteigt. In der Draufsicht gemäß Figur 2 definiert er annähernd die äußere Kontur des Rasenmähers. An seinem vorderen Ende 1a ist er entgegengesetzt schräg nach oben abgewinkelt und trägt dort die Vorderräder 2 sowie die Lenkung 3. Im mittleren Bereich ist über Vertikalstreben 4, 5 und Horizontal streben 5a ein Antriebsmotor 6 untergebaut, der in an sich bekannter Weise über einen Keilriemen 7 eine nicht näher dargestellte Messerwelle des Mähwerkes 8 antreibt. Das Mähwerk 8 ist seinerseits über nicht dargestellte Hebel ebenfalls am Fahrgestell 1, jedoch höhenverstellbar, aufgehängt.

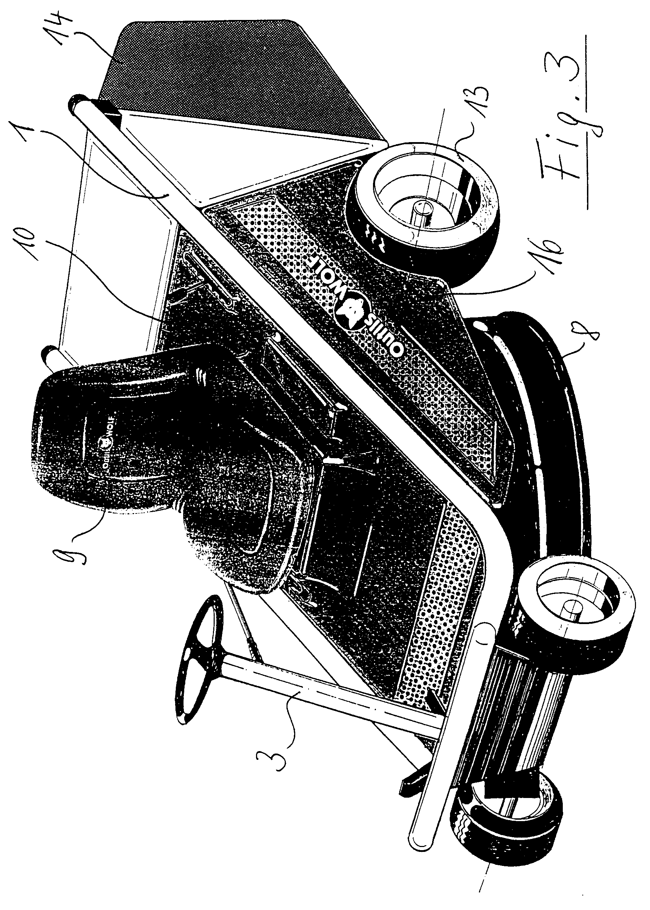

Etwa oberhalb des Motors 6 befindet sich der Fahrersitz 9. Er ist zwecks Einstellung der optimalen Sitzposition verstellbar am Fahrgestell gelagert, und zwar mit Hilfe einer in Figur 3 sichtbaren Abdeckung 10, die zumindest seitlich an den Rahmenteilen des Fahrgestelles montiert ist.

Hinter dem Sitzbereich weist das Fahrgestell weitere nach unten ragende Streben 11 auf, die zusammen mit den Streben 5 einen Hydraulikantrieb 12 für die Hinterräder 13 tragen. Dieser Hydraulikantrieb wird in bekannter Weise von dem Motor 6 angetrieben.

Am rückwärtigen oberen Ende trägt der Rahmen 1 einen Grasfangbehälter 14, dessen obere Abdeckung etwa mit der Ebene des Rahmens fluchtet. Ein tangential vom Mähwerk 8 ausgehender Auswurfkanal 15 läuft etwa geradlinig schräg nach oben, und zwar seitlich am Motor vorbei, aber ohne dabei die Kontur des Rahmens 1 zu überschreiten und mündet etwa mittig in den Auffangbehälter 14. Das abgeschnittene Gras kann dadurch auf schnellstem und direktestem Weg mit minimalen Strömungsverlusten dem Behälter 14 zugeführt werden.

Zum Entleeren ist der Behälter 14 schwenkbar am Rahmen 1 gelagert, so daß er nach hinten weggekippt werden kann. Dazu ist der Rahmen nach hinten verlängert und trägt dort eine Schwenklagerung 17, über die der Behälter 14 mittels eines Gestänges bequem vom Fahrersitz aus hoch geschwenkt werden kann, um ihn zu entleeren. Zweckmäßig wird dieses Hochschwenken durch Gasdruckfedern unterstützt.

Die beschriebene Konstruktion ist kostengünstig, weil der Rahmen 1 aus einem durchgehenden, mehrfach abgebogenen Profilrohr besteht, das dank seines schrägen nach hinten ansteigenden Verlaufes optimal zum Unterflur-Anbau aller Maschinenteile geeignet ist. Sein oberer Abschluß erfolgt durch die bereits genannte Abdeckung 10, während seitlich passende Abdeckbleche 16 angebracht sind.

Zusammenfassend zeichnet sich also der beschriebene Aufsitzmäher durch kompakten Aufbau aller Komponenten, eine kurze strömungsgünstige Verbindung zwischen Mähwerk und Grassammelbehälter und nicht zuletzt aufgrund der innerhalb des Rahmens angeordneten Abdeckung, die eine formschöne Trennung zwischen Sitz- und Motorbereich bildet, durch ein gefälliges Äußeres aus. Er erweckt nicht mehr den Eindruck eines Arbeitsgerätes sondern eher eines Hobbyfahrzeuges.

## Patentansprüche

1. Aufsitz-Rasenmäher, bestehend aus einem Fahrgestell (1), an dem direkt oder indirekt folgende Teile montiert sind: Räder (2, 13) zum verfahren des Rasenmähers, zumindest ein Mähwerk (8), zumindest ein Antriebsmotor (6) für das Mähwerk und zumindest einen Teil der Räder, ein Grassammelbehälter (14), der durch einen Auswurfkanal (15) mit dem Mähwerk (8) verbunden ist und ein Sitz (9) für den Fahrer des Rasenmähers,
dadurch gekennzeichnet,
daß das Fahrgestell (1) im Hauptbereich seiner Längserstreckung von vorn nach hinten ansteigt, daß es an seinem hinteren Ende den Grassammelbehälter (14) beidseits umfaßt und daß der Grassammelbehälter (14) zumindest größtenteils unterhalb des Fahrgestelles (1) angeordnet ist.

2. Rasenmäher nach Anspruch 1,
dadurch gekennzeichnet,
daß das Fahrgestell (1) mit einem Winkel von 20° bis 40°, insbesondere von etwa 25° bis etwa 35° nach hinten ansteigt.

3. Rasenmäher nach Anspruch 1,
dadurch gekennzeichnet,
daß der Antriebsmotor (6) zumindest größtenteils unterhalb des Fahrgestelles (1) angeordnet ist.

4. Rasenmäher nach Anspruch 1,
dadurch gekennzeichnet,
daß der Auswurfkanal (15) zumindest größtenteils unterhalb des Fahrgestelles (1) angeordnet ist.

5. Rasenmäher nach Anspruch 1,
dadurch gekennzeichnet,
daß das Fahrgestell (1) rahmenartig ausgebildet ist.

6. Rasenmäher nach Anspruch 5,
dadurch gekennzeichnet,
daß das Fahrgestell (1) als in der Ansicht von oben etwa U-förmiger Rahmen ausgebildet ist.

7. Rasenmäher nach Anspruch 5,
dadurch gekennzeichnet,
daß das rahmenartige Fahrgestell gleichmäßig schräg nach hinten ansteigt.

8. Rasenmäher nach Anspruch 1,
dadurch gekennzeichnet,
daß das Fahrgestell (1) an seinem vorderen Ende (1a) in einer Abbiegung nach vorn und oben ausläuft.

9. Rasenmäher nach Anspruch 1,
dadurch gekennzeichnet,
daß das Fahrgestell (1) an seinem vorderen Ende die Vorderräder (2) und deren Lenkung (3) trägt.

10. Rasenmäher nach Anspruch 1,
dadurch gekennzeichnet,
daß das rahmenartige Fahrgestell (1) nach hinten verlängert ist und dort eine Schwenklagerung (17) für den Grassammelbehälter (14) aufweist.

11. Rasenmäher nach Anspruch 1 oder 10,
dadurch gekennzeichnet daß der Grassammelbehälter (14) durch ein Gestänge vom Fahrersitz in seine Entleerstellung verschwenkbar ist.

12. Rasenmäher nach Anspruch 1,
dadurch gekennzeichnet,
daß das Fahrgestell (1) durch Rohre, vorzugsweise durch ein mehrfach abgewinkeltes umlaufendes Rohr gebildet ist.

13. Rasenmäher nach Anspruch 5,
dadurch gekennzeichnet,
daß im Zwischenraum des rahmenartigen Fahrgestelles (1) eine Abdeckung (10) angeordnet ist.

14. Rasenmäher nach Anspruch 6,
dadurch gekennzeichnet,
daß der U-förmige Rahmen vertikale Haltestreben (5) für den Antrieb aufweist, die gleichzeitig mit beiden Schenkeln des Rahmens verbunden sind und dessen Aussteifung in Querrichtung bewirken.

## Claims

1. A lawnmower with operator seating consisting of a vehicle chassis (1) on which the following components are mounted directly or indirectly: wheels (2, 13) for moving the lawnmower, at least one mowing mechanism (8), at least one driving motor (6) for the mowing mechanism and at least part of the wheels, a grass collection container (14) which is connected with the mowing mechanism (8) by way of an ejection channel (15) and a seat (9) for the driver of the lawnmower,
characterised in that
the vehicle chassis (1) rises in the main region of its longitudinal extent from the front rearwardly, in that at its rear end it encompasses the grass collection container (14) on both sides and in that the grass collection container (14) is arranged at least for its greater part beneath the vehicle chassis (1).

2. A lawnmower according to claim 1,
characterised in that
the vehicle chassis (1) rises rearwardly at an angle of 20° to 40°, particularly from about 25° to about 35°.

3. A lawnmower according to claim 1,
characterised in that
at least for its greater part the drive motor (6) is arranged beneath the vehicle chassis (1).

4. A lawnmower according to claim 1,
characterised in that
at least for its greater part the ejection channel (15) is arranged beneath the vehicle chassis (1).

5. A lawnmower according to claim 1,
characterised in that
the vehicle chassis (1) is formed as a framework.

6. A lawnmower according to claim 5
characterised in that
the vehicle chassis (1) is formed, when viewed from above, as an approximately U-shaped frame.

7. A lawnmower according to claim 5
characterised in that
the frame-type vehicle chassis rises uniformly obliquely rearwardly.

8. A lawnmower according to claim 1
characterised in that
the vehicle chassis (1) extends at its front end (1a) in a forward and upward bend.

9. A lawnmower according to claim 1
characterised in that
the vehicle chassis (1) carries the front wheels (2) and their steering (3) at its front end.

10. A lawnmower according to claim 1
characterised in that
the frame-like vehicle chassis (1) is extended rearwardly and there has a pivotal bearing (17) for the grass collection container (14).

11. A lawnmower according to claim 1 or 10,
characterised in that
the grass collection container (14) can be pivoted to its emptying position from the driver's seat by way of a lever arm.

12. A lawnmower according to claim 1
characterised in that
the vehicle chassis (1) is formed from tubes, preferably from a multiply bent peripheral tube.

13. A lawnmower according to claim 5
characterised in that
a covering (10) is arranged in the intermediate space of the frame-like vehicle chassis (1)

14. A lawnmower according to claim 6
characterised in that
the U-shaped frame has vertical holding struts (5) for the drive mechanism which are connected at the same time with both limbs of the frame and effect a transverse stiffening of the frame.

## Revendications

1. Tondeuse à gazon à place assise pour conducteur, comprenant un châssis (1) sur lequel les pièces suivantes sont installées directement ou indirectement : roues (2, 13) pour le déplacement de la tondeuse à gazon, au moins un dispositif de coupe (8), au moins un moteur d'entraînement (6) pour le dispositif de coupe et pour au moins une partie des roues, un panier de ramassage d'herbe (14) raccordé au dispositif de coupe (8) par un canal d'éjection (15), et un siège (9) pour le conducteur de la tondeuse à gazon, **caractérisée en ce que** le châssis (1) monte d'avant en arrière dans la partie principale de son étendue longitudinale, en ce qu'il entoure le panier de ramassage d'herbe (14) des deux côtés sur son extrémité arrière et en ce que le panier de ramassage d'herbe (14) est disposé, au moins en majeure partie, en dessous du châssis (1).

2. Tondeuse à gazon selon la revendication 1, **caractérisée en ce que** le châssis (1) monte vers l'arrière avec un angle de 20° à 40°, en particulier d'environ 25° à environ 35°.

3. Tondeuse à gazon selon la revendication 1, **caractérisée en ce que** le moteur d'entraînement (6) est disposé au moins en majeure partie en dessous du châssis (1).

4. Tondeuse à gazon selon la revendication 1, **caractérisée en ce que** le canal d'éjection (15) est disposé, au moins en majeure partie, en dessous du châssis (1).

5. Tondeuse à gazon selon la revendication 1, **caractérisée en ce que** le châssis (1) est en forme de cadre.

6. Tondeuse à gazon selon la revendication 5, **caractérisée en ce que** le châssis (1), vu de dessus, est formé comme un cadre à peu près en forme de U.

7. Tondeuse à gazon selon la revendication 5, **caractérisée en ce que** le châssis (1) en forme de cadre remonte vers l'arrière de manière uniformément inclinée.

8. Tondeuse à gazon selon la revendication 1, **caractérisée en ce que** le châssis (1) se termine à son extrémité avant (1a) en un coude allant vers l'avant et vers le haut.

9. Tondeuse à gazon selon la revendication 1, **caractérisée en ce que** le châssis (1) porte les roues avant (2) et leur dispositif de guidage (3) sur son extrémité avant.

10. Tondeuse à gazon selon la revendication 1, **caractérisée en ce que** le châssis (1) en forme de cadre est prolongé vers l'arrière où il présente un palier pivotant (17) pour le panier de ramassage d'herbe (14).

11. Tondeuse à gazon selon la revendication 1 ou 10, **caractérisée en ce** que le panier de ramassage d'herbe (14) est pivotable dans sa position de vidage par des tringles du siège du conducteur.

12. Tondeuse à gazon selon la revendication 1, **caractérisée en ce que** le châssis (1) est formé par des tubes, de préférence par un tube coudé plusieurs fois.

13. Tondeuse à gazon selon la revendication 5, **caractérisée en ce** qu'un capot (10) est placé dans l'espace intermédiaire du châssis (1) en forme de cadre.

14. Tondeuse à gazon selon la revendication 6, **caractérisée en ce que** le cadre en forme de U présente des barres de maintien (5) verticales pour l'entraînement raccordées en même temps aux deux côtés du cadre et dont la rigidité agit en sens transversal.
